(19) Europäisches Patentamt
European Patent Office
Office européen des brevets

(11) EP 1 431 716 A1

(12) EUROPÄISCHE PATENTANMELDUNG

(43) Veröffentlichungstag:
23.06.2004 Patentblatt 2004/26

(51) Int Cl.⁷: G01F 1/58

(21) Anmeldenummer: 03027195.1

(22) Anmeldetag: 27.11.2003

(84) Benannte Vertragsstaaten:
AT BE BG CH CY CZ DE DK EE ES FI FR GB GR
HU IE IT LI LU MC NL PT RO SE SI SK TR
Benannte Erstreckungsstaaten:
AL LT LV MK

(30) Priorität: 21.12.2002 DE 10260561

(71) Anmelder: ABB PATENT GmbH
68526 Ladenburg (DE)

(72) Erfinder:
• Herwig, Jörg, Dipl.-Ing.
37139 Adelebsen (DE)
• Keese, Dieter
37194 Wahlsburg (DE)
• Schwiderski, Hans, W., Dipl.-Ing.
37176 Nörten-Hardenberg (DE)

(74) Vertreter: Schmidt, Karl Michael
ABB Patent GmbH
Oberhausener Str. 33
40472 Ratingen (DE)

(54) **Magnetisch induktiver Durchflussmesser**

(57) Die Erfindung bezieht sich auf einen magnetischen induktiven Durchflussmesser mit einer Anordnung zur Erzeugung eines magnetischen Gleichfeldes (5,6 od. 12,13), die bezüglich einer Strömungsvorrichtung (3) so angeordnet ist, dass ein in der Strömungsvorrichtung (3) strömendes Medium senkrecht vom magnetischen Gleichfeld (B) durchsetzbar ist und bei dem ein erstes Elektrodenpaar (E1, E2), bestehend aus gegenüberliegenden Elektroden (E1, E2), senkrecht zum Magnetfeld und quer zur Längsachse der Strömungsvorrichtung (3) angeordnet ist. Weiter bezieht sich die Erfindung auf ein Verfahren zur Messung des Durchflusses von durch Strömungsvorrichtungen (3) strömende Medien, bei dem die Strömungsvorrichtung (3) von einem magnetischen Gleichfeld (B) durchsetzt wird und ein aus zwei Elektroden bestehendes, quer zur Längsachse der Strömungsvorrichtung angeordnetes Elektrodenpaar (E1, E2) im wesentlichen senkrecht zum magnetischen Gleichfeld (B) angeordnet ist und mit dem ersten Elektrodenpaar (E1, E2) eine dem Durchfluss proportionale Spannung (Ue1) aufgenommen wird. Um einen Durchflussmesser anzugeben, der möglichst energiearm betrieben werden kann, keine Störfelder verursacht und unanfällig gegen elektrochemische Störspannungen ($U_{stör}$) ist, wird vorgeschlagen, ein zweites Elektrodenpaar (E3, E4) zur Aufnahme von Störspannungen ($U_{stör}$) an der Strömungsvorrichtung (3) anzuordnen und durch Differenzbildung der beiden aufgenommenen Spannungswerte (Ue1, Ue2) eine dem Durchfluss proportionale Spannung ($U_{nutz}$) ohne Störspannung ($U_{stör}$) zu ermitteln.

FIG. 2

EP 1 431 716 A1

## Beschreibung

Die Erfindung bezieht sich auf einen magnetischen induktiven Durchflussmesser mit einer Anordnung zur Erzeugung eines magnetischen Gleichfeldes, die bezüglich einer Strömungsvorrichtung so angeordnet ist, dass ein in der Strömungsvorrichtung strömendes Medium senkrecht vom magnetischen Gleichfeld durchsetzbar ist und bei dem ein erstes Elektrodenpaar, bestehend aus gegenüberliegenden Elektroden, senkrecht zum Magnetfeld und quer zur Längsachse der Strömungsvorrichtung angeordnet ist. Weiter bezieht sich die Erfindung auf ein Verfahren zur Messung des Durchflusses von durch Strömungsvorrichtungen strömende Medien, bei dem die Strömungsvorrichtung von einem magnetischen Gleichfeld durchsetzt wird und ein aus zwei Elektroden bestehendes, quer zur Längsachse der Strömungsvorrichtung angeordnetes Elektrodenpaar im wesentlichen senkrecht zum magnetischen Gleichfeld angeordnet ist und mit dem ersten Elektrodenpaar eine dem Durchfluss proportionale Spannung aufgenommen wird.

Magnetisch-induktive Durchflussmesser (IDM) werden zur Messung des Durchflusses von Flüssigkeiten, Breien und Pasten mit einer bestimmten elektrischen Mindestleitfähigkeit eingesetzt. Diese Geräte verursachen keinen Druckverlust und haben keine beweglichen oder in das Messrohr hineinragende Teile, so dass sie verschleißfrei arbeiten. Die Art der Messung des Durchflusses ist unabhängig von Dichte, Temperatur, Viskosität und Druck. Sie wird kaum von Ablagerungen und Verschmutzungen sowie Strömungsprofileinflüssen beeinflusst.

Anwendung finden diese Durchflussmesser in hygienischen Prozessen, im Wasserbeziehungsweise Abwasserbereich und in chemischen Anlagen.

Besonders geeignet sind die Durchflussmesser für kontinuierliche Strömungen, aber sie können auch zur Messung von pulsierenden Volumenströmen oder Zweiphasen-Messstoffen eingesetzt werden. Weiter finden Durchflussmesser Anwendung beim Abfüllen und Dosieren von Flüssigkeiten, wobei sie sowohl beim Abfüllen und Dosieren von kleinsten als auch sehr großen Mengen eingesetzt werden. Hier werden sie in der Nahrungsmittelindustrie, Pharmazie, Chemie sowie der Kosmetikindustrie eingesetzt.

Wichtige Kriterien für Durchflussmesser sind einerseits die Ansprechzeit, d.h. die Zeit die notwendig ist, um den Durchfluss zu messen und andererseits der Energieverbrauch, da die Durchflussmesser auch an Orten eingesetzt werden, an denen jede zusätzliche Energiezufuhr sehr aufwendig zu realisieren ist.

Durchflussmesser sind sehr einfach aufgebaut und an viele Rohrdurchmesser anpassbar und in unterschiedlichen Materialausführungen, z.B. Edelstahl realisierbar.

In besonderen Ausführungsformen ist eine beidseitige Erfassung des Durchflusses, d.h. sowohl des Hin- als auch des Rückflusses als auch ein Leerlauf erfassbar.

Das erzeugte Messsignal wird einer elektronischen Steuer- und Messschaltung zugeführt, die beispielsweise ein Display ansteuert oder das Signal über einen Bus an eine Steuerzentrale liefert. Das Messsignal kann sowohl passiv über einen Optokoppler als auch aktiv über ein Impulssignal abgegeben werden. Aus dem gewonnenen Messsignal lassen sich unterschiedliche Größen, wie der momentane Durchfluss in 1/s, den Gesamtdurchfluss in $m^3$, die momentane Flussrichtung, einstellbare minimale oder maximale Grenzwertüberschreitungen beziehungsweise - unterschreitungen ermitteln.

Es sind magnetisch induktive Durchflussmesser bekannt, die mit zeitlich änderbaren Magnetfeldern betrieben werden. Diese Durchflussmesser benötigen zur Erzeugung eines zeitlich änderbaren Magnetfeldes, das auch als Wechselfelder bezeichnet wird, Energie. Das Nutzsignal bei zeitlich veränderbaren Magnetfeldern hat dieselbe Signalform wie das Magnetfeld selbst, so dass für eine Auswertung mindestens eine Halbwelle des Nutzsignals benötigt wird, um eine Bestimmung der Messgröße vornehmen zu können. Da die Erregerfrequenz zur Erzeugung des zeitlich änderbaren Magnetfeldes endlich ist, ist auch die Ansprechzeit des Durchflussmessers nicht beliebig zu verkürzen.

Darüber hinaus sind Durchflussmesser bekannt, die mit einem Permanentmagneten betrieben werden. In der DE 198 31 491 wird ein Verfahren und eine Vorrichtung zur magnetisch induktiven Messung des Volumendurchflusses von Fluiden mit Permanentmagneten beschrieben. Durch Wechselwirkung eines Magnetfeldes der Induktion B mit der Strömungsgeschwindigkeit v stellt sich eine induzierte elektrische Spannung U zwischen zwei innerhalb des Messrohres befindlichen Elektrodenpaaren ein. Das Magnetfeld wird durch einen Permanentmagneten erzeugt. Die Elektroden werden alternierend in einem bestimmten Takt von einer Gleichspannungsquelle aufgeladen, so dass sich auf jeweils einer Seite der Elektrode eine Spannung einstellt, die einem in einem entsprechenden Takt betriebenen Integrierer zugeführt wird. Das Ausgangssignal des Integrierers ist der induzierten Spannung und damit der Strömungsgeschwindigkeit proportional. Durch den Verzicht auf ein magnetisches Wechselfeld werden hohe Verluste und Signalstörungen unterbunden.

Die vom Elektrodenpaar aufgenommene Spannung unterliegt jedoch starken elektrochemischen Störspannungen, die ein zuverlässiges Messergebnis beeinträchtigen oder eine aufwendige Auswertung erfordern. Diese elektrochemischen Störspannungen entstehen auf grund von Wärme, Druckänderungen, anderen chemischen Zusammensetzungen des Mediums und Viskositätsänderungen.

Aufgabe der Erfindung ist es deshalb, einen Durchflussmesser anzugeben, der möglichst energiearm betrieben wird, keine Störfelder verursacht und unanfällig gegen elektrochemische Störspannungen ist.

Diese Aufgabe wird mit einem Durchflussmesser mit einer Anordnung zur Erzeugung eines magnetischen Gleichfeldes gelöst, die bezüglich einer Strömungsvorrichtung so angeordnet ist, dass ein in der Strömungsvorrichtung strömendes Medium senkrecht vom magnetischen Gleichfeld durchsetzbar ist und bei dem ein erstes Elektrodenpaar, bestehend aus gegenüberliegenden Elektroden, die senkrecht zum Magnetfeld und quer zur Längsachse der Strömungsvorrichtung angeordnet ist und bei dem ein zweites Elektrodenpaar zur Aufnahme von Störspannungen an der Strömungsvorrichtung angeordnet ist.

Es wird vorgeschlagen, das Magnetfeld mit einer Anordnung zur Erzeugung eines zeitlich konstanten Magnetfeldes zu erzeugen. Diese Anordnung zur Erzeugung eines zeitlich konstanten Magnetfeldes wird an einer Strömungsvorrichtung angeordnet, die beispielsweise als Rohr ausgebildet ist. Auch an jedem anderen profilierten Hohlkörper, kann ein erfindungsgemäßer Durchflussmesser angeordnet werden. Weiter werden der Strömungsvorrichtung zwei Elektrodenpaare zugeordnet, so dass durch Differenzbildung der induzierten Spannungen ein Nutzsignal erzeugt werden kann, welches weitgehend frei von Störsignalen ist. Da wegen der Gleichfelderregung Störsignale, die nicht gleichförmig sind, bei der Auswertung vernachlässigt werden können, handelt es sich bei den Störsignalen nur um elektrochemische Störsignale, die an den Elektroden und im Medium entstehen. Diese Störsignale werden durch Wärme, Druckänderungen, anderer chemischen Zusammensetzung des Mediums, Viskositätsänderungen gebildet. Weiter erzeugen Gleichfelder geringere Störfelder als Wechselfelder, wodurch andere Messgeräte weniger beeinflusst werden. Durch die Verwendung von zwei Elektrodenpaaren werden an beiden Elektrodenpaaren auch die Störspannungen aufgenommen. Dadurch kann man bei der Auswertung der aufgenommenen Spannungswerte auf einfache Art ein Nutzsignal erhalten, welches frei von Störspannungen ist, ohne das eine aufwendige Filterschaltung erforderlich ist, die das Nutzsignal von den Störspannungen trennt. Gerade weil die elektrochemischen Störspannungen sehr unterschiedliche Ursachen haben können, ist die Trennung von Nutzsignal und Störspannung normalerweise sehr aufwendig. Die Erfindung bietet für dieses Problem eine unkomplizierte und einfach zu realisierende Lösung.

In einer vorteilhaften Ausgestaltung der Erfindung ist das zweite Elektrodenpaar im Wesentlichen parallel zum ersten Elektrodenpaar ausgerichtet. Dadurch werden in beiden Elektrodenpaaren nahezu gleiche Spannungswerte induziert, die sich jeweils aus der Störspannung und dem Spannungswert zusammensetzen, der dem Durchfluss proportional ist. Durch Differenzbildung kann somit das Nutzsignal weitgehend von Störsignalen getrennt werden. Durch das im Wesentlichen parallele Anordnen des zweiten Elektrodenpaares wird auch in diesem Elektrodenpaar eine Spannung induziert, die dem Durchfluss proportional ist.

In einer weiteren vorteilhaften Ausgestaltung der Erfindung ist das zweite Elektrodenpaar im Wesentlichen senkrecht oder orthogonal zum ersten Elektrodenpaar ausgerichtet. Dadurch wird in diesem zweiten Elektrodenpaar keine Spannung induziert, die dem Durchfluss proportional ist, da die Elektrodenachse nicht die Magnetfeldlinien schneidet. An diesem zweiten Elektrodenpaar wird nur die Störspannung aufgenommen. Somit kann auch hier durch Differenzbildung das Nutzsignal weitgehend von Störsignalen getrennt werden.

In einer weiteren vorteilhaften Ausgestaltung der Erfindung ist die Anordnung zur Erzeugung eines magnetischen Gleichfeldes als Permanentmagnet ausgebildet. Durch die Verwendung von Werkstoffen aus dem Bereich der seltenen Erden, lassen sich heute Permanentmagneten herstellen, die sehr lange ein ausreichend großes zeitlich konstantes Magnetfeld erzeugen. Durch die Verwendung eines Permanentmagneten ist keine Energiezufuhr zur Erzeugung des Wechselfeldes erforderlich, wodurch der Einsatz von Durchflussmessern mit Permanentmagnet an entlegenen Orten erleichtert wird.

In einer weiteren vorteilhaften Ausgestaltung der Erfindung ist die Anordnung zur Erzeugung eines magnetischen Gleichfeldes als Spulenanordnung realisiert, der eine Gleichspannung zuführbar ist. Dadurch wird es ermöglicht, durch die Höhe und Dauer der Gleichspannungszuführung das Magnetfeld zu beeinflussen, was in einigen Anwendungsfällen von Vorteil sein kann, beispielsweise, wenn die Art des durchströmenden Mediums abwechselnd ist oder Durchflussmesser transportabel ausgeführt ist und an unterschiedlichen Einsatzorten verwendet wird.

Die Aufgabe wird auch durch ein Verfahren zur Messung des Durchflusses von durch Strömungsvorrichtungen strömende Medien gelöst, bei dem die Strömungsvorrichtung von einem magnetischen Gleichfeld durchsetzt wird und ein aus zwei Elektroden bestehendes, quer zur Längsachse der Strömungsvorrichtung angeordnetes Elektrodenpaar im wesentlichen senkrecht zum magnetischen Gleichfeld angeordnet ist und mit dem ersten Elektrodenpaar eine dem Durchfluss proportionale Spannung aufgenommen wird und mittels eines zweiten Elektrodenpaares wenigstens auch die Störspannung aufgenommen wird und mittels Differenzbildung der beiden Spannungswerte der Elektrodenpaare die dem Durchfluss proportionale Spannung ermittelt wird.

Die Erfindung wird nachstehend anhand eines Ausführungsbeispieles unter Bezugnahme auf die Zeichnungen exemplarisch beschrieben. Es zeigen:

Fig. 1:  Aufbau eines Durchflussmessers mit einem Elektrodenpaar nach dem Stand der Technik

Fig. 2: Aufbau eines Durchflussmessers mit zwei Elektrodenpaaren, wobei das zweite Elektrodenpaar parallel zum ersten Elektrodenpaaren ausgerichtet ist und signalerzeugend ist

Fig. 3: Aufbau eines Durchflussmessers mit zwei Elektrodenpaaren, wobei das zweite Elektrodenpaar in Richtung des Magnetfeldes ausgerichtet ist

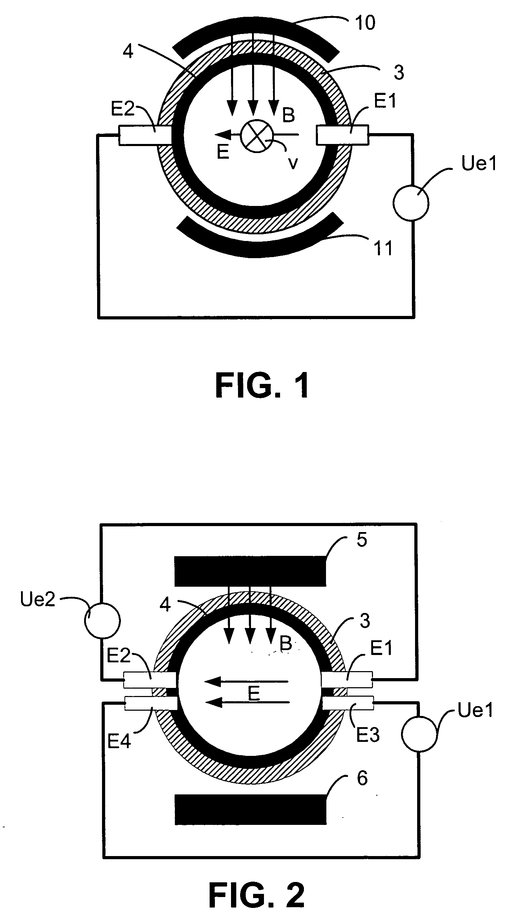

Figur 1 zeigt einen Durchflussmesser nach dem Stand der Technik. Das Rohr 3 besteht aus einem Material aus nicht magnetischem Material, wie beispielsweise Stahl, welches innen mit einem elektrisch nichtleitenden Material 4, beispielsweise PTFE, ausgekleidet oder beschichtet ist. Um das Rohr 3 sind Spulen 10,11 angeordnet, die ein zeitlich wechselndes Magnetfeld erzeugen, dargestellt durch die Magnetfeldlinien B. Aufgrund des Induktionsgesetzes wird an den Elektroden E1, E2 eine Spannung Ue1 induziert. Diese Spannung wird von der Strömungsgeschwindigkeit v beeinflusst, so dass entsprechend nicht dargestellte Verarbeitungseinheiten, aus der eine Spannung Ue1 einen Wert ermitteln können, der dem Durchfluss proportional ist. Hier wird ein Magnetfeld verwendet, welches von Spulen 10,11 erzeugt wird, die mit Wechselspannung betrieben werden. Senkrecht zum Magnetfeld B baut sich ein elektrisches Feld E auf. Zu dem elektrischen Feld E und dem Magnetfeld B verläuft das strömende Medium ebenfalls im rechten Winkel, in Richtung der aus dem Blatt hervortretenden z-Richtung. Das strömende Medium wird mit der Geschwindigkeit v durchflossen. Dabei gilt folgender Zusammenhang gemäß dem Faradayschen Gesetz,

$$E = v \cdot B \qquad (1)$$

v = Fließgeschwindigkeit des Mediums( z- Richtung);
B = Magnetische Induktion;
E = elektrische Feldstärke;

Figur 2 zeigt einen Aufbau eines Durchflussmessers, gemäß der vorliegenden Erfindung. Die Elektrodenpaare E1, E2 und E3, E4 sind jeweils senkrecht zum Magnetfeld angeordnet, so dass in beiden Elektrodenpaaren jeweils eine Spannung Ue1 und Ue2 erzeugt wird, da ein Leiter, in diesem Fall das Medium in Z-Richtung die Magnetfeldlinien schneidet. Diese Spannungen Ue1 und Ue2 setzen sich jeweils aus dem Signal zusammen, das dem Durchfluss proportional ist und aus der elektrochemischen Störspannung. Zur Erzeugung des Gleichfeldes werden hier Permanentmagnete 5, 6 eingesetzt, so dass die Magnetfeldlinien die Strömungsvorrichtung 3 senkrecht durchsetzen. Die Spannungen Ue1 und Ue2 werden einer nicht dargestellten Auswerteschaltung zugeführt, die mittels Differenzbildung aus den aufgenommenen Spannungen Ue1 und Ue2 das Nutzsignal ermittelt, welches dem Durchfluss proportional ist.

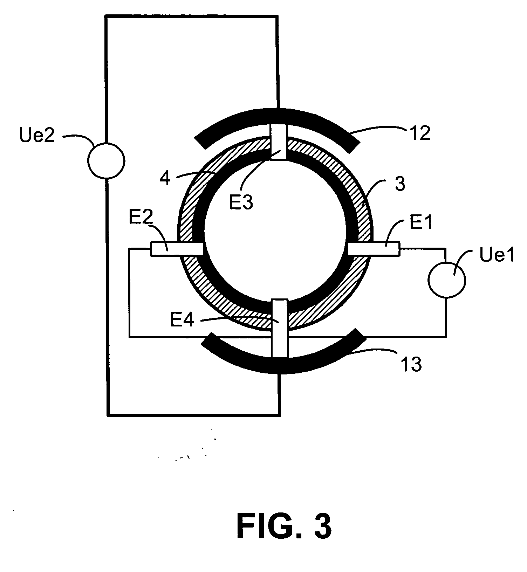

In Fig.3 werden zur Erzeugung des Gleichfeldes Spulenanordnungen 12, 13 eingesetzt. Diesen Spulen 12, 13 wird eine Gleichspannung zugeführt. Durch die Anordnung der Elektrodenpaare E1, E2 und E3, E4 wird nur an dem Elektrodenpaar E1, E2 ein Messsignal erzeugt, welches Informationen über den Durchfluss enthält, da nur die Feldlinien des Elektrodenpaares E1, E2 das Magnetfeld schneiden. An dem anderen Elektrodenpaar E3, E4 wird kein Messsignal bezüglich das Durchflusses erzeugt. An beiden Elektrodenpaaren E1, E2 und E3, E4 werden jedoch die Störspannungen $U_{stör}$ aufgrund elektrochemischer Spannungen aufgenommen. Werden nun die Spannungen Ue1 und Ue2 einem nicht dargestellten Operationsverstärker zur Auswertung zugeführt, können durch Differenzbildung die Störspannungen eliminiert werden. Dazu kann folgende Gleichung verwendet werden

$$U_{nutz} = (Ue1 + U_{stör}) - (Ue2 + U_{stör}) \qquad (2)$$

In einer alternativen Ausgestaltung eines Durchflussmessers gemäß Figur 3 können die Spulen 12, 13 auch durch Permanentmagneten 5, 6 ersetzt werden, so dass diese ein Gleichfeld erzeugen.

**Bezugszeichenliste**

| | |
|---|---|
| E | elektrisches Feld |
| B | Magnetische Induktion |
| v | Fliessgeschwindigkeit |
| Ue1 | induzierte Spannung am ersten Elektrodenpaar |
| Ue2 | induzierte Spannung am zweiten Elektrodenpaar |
| $U_{stör}$ | elektrochemische Störspannung |
| $U_{nutz}$ | Spannung, die dem Durchfluss proportional ist |
| 3 | Strömungsvorrichtung, Rohr, Hohlkörper |
| 4 | Innenbeschichtung |
| 5 | Permanentmagnet |
| 6 | Permanentmagnet |
| 10 | Spule mit Wechselspannung |
| 11 | Spule mit Wechselspannung |
| 12 | Spule mit Gleichspannung |
| 13 | Spule mit Gleichspannung |
| E1 | Elektrode des ersten Elektrodenpaares |
| E2 | Elektrode des ersten Elektrodenpaares |
| E3 | Elektrode des zweiten Elektrodenpaares |
| E4 | Elektrode des zweiten Elektrodenpaares |

**Patentansprüche**

1. Durchflussmesser mit einer Anordnung (5,6 oder 12, 13) zur Erzeugung eines magnetischen Gleichfeldes (B), die bezüglich einer Strömungsvorrichtung (3) so angeordnet ist, dass ein in der Strömungsvorrichtung (3) strömendes Medium senkrecht vom magnetischen Gleichfeld (B) durchsetzbar ist und bei dem ein erstes Elektrodenpaar (E1, E2), bestehend aus gegenüberliegenden Elektroden, senkrecht zum Magnetfeld (B) und quer zur Längsachse der Strömungsvorrichtung (3) angeordnet ist,
**dadurch gekennzeichnet, dass** ein zweites Elektrodenpaar (E3, E4) zur Aufnahme von Störspannungen ($U_{stör}$) an der Strömungsvorrichtung (3) angeordnet ist.

2. Durchflussmesser nach Anspruch 1,
**dadurch gekennzeichnet, dass** das zweite Elektrodenpaar (E3, E4) im Wesentlichen parallel, quer zur Längsachse zum ersten Elektrodenpaar (E1, E2) ausgerichtet ist.

3. Durchflussmesser nach Anspruch 1,
**dadurch gekennzeichnet, dass** das zweite Elektrodenpaar (E3, E4) im Wesentlichen orthogonal zum ersten Elektrodenpaar (E1, E2) ausgerichtet ist.

4. Durchflussmesser nach Anspruch 2 oder 3,
**dadurch gekennzeichnet, dass** die Anordnung zur Erzeugung eines magnetischen Gleichfeldes (B) als Permanentmagneten (5, 6) ausgebildet ist.

5. Durchflussmesser nach Anspruch 2 oder 3,
**dadurch gekennzeichnet, dass** die Anordnung zur Erzeugung eines magnetischen Gleichfeldes als Spulenanordnung (12, 13) ausgebildet ist, der eine Gleichspannung zuführbar ist.

6. Durchflussmesser nach Anspruch 4 oder 5,
**dadurch gekennzeichnet, dass** das erste Elektrodenpaar (E1, E2) eine dem Durchfluss proportionale Spannung ($U_{nutz}$) und eine Störspannung aufnimmt und das zweite Elektrodenpaar (E3, E4) wenigstens auch die Störspannung ($U_{stör}$) aufnimmt, so dass durch Differenzbildung der beiden aufgenommenen Spannungswerte (Ue1, Ue2) die dem Durchfluss proportionale Spannung ($U_{nutz}$) ohne Störspannung ($U_{stör}$) ermittelbar ist.

7. Verfahren zur Messung des Durchflusses von durch Strömungsvorrichtungen (3) strömende Medien, bei dem die Strömungsvorrichtung (3) von einem magnetischen Gleichfeld (B) durchsetzt wird und ein aus zwei Elektroden (E1, E2) bestehendes, quer zur Längsachse der Strömungsvorrichtung (3) angeordnetes Elektrodenpaar (E1, E2) im wesentlichen senkrecht zum magnetischen Gleichfeld (B) angeordnet ist und mit dem ersten Elektrodenpaar (E1, E2) eine dem Durchfluss proportionale Spannung ($U_{nutz}$) mit Störspannungsanteil ($U_{stör}$) aufgenommen wird,
**dadurch gekennzeichnet, dass** mittels eines zweiten Elektrodenpaares (E3, E4) wenigstens auch die Störspannung ($U_{stör}$) aufgenommen wird und mittels Differenzbildung der beiden Spannungswerte (Ue1, Ue2) der Elektrodenpaare (E1, E2 und E3, E4) die dem Durchfluss proportionale Spannung ($U_{nutz}$) ermittelt wird.

EP 1 431 716 A1

**FIG. 1**

**FIG. 2**

**FIG. 3**

## EUROPÄISCHER RECHERCHENBERICHT

Europäisches
Patentamt

Nummer der Anmeldung

EP 03 02 7195

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 866 823 A (SCARPA THOMAS J) 2. Februar 1999 (1999-02-02) * Spalte 7, Zeile 17 - Spalte 8, Zeile 34; Abbildungen 1B,2B * ----- | 1-7 | G01F1/58 |
| X | GB 2 292 613 A (HIGHAM EDWARD HALL) 28. Februar 1996 (1996-02-28) * Seite 4, Absatz 2 - Seite 6, Absatz 2; Abbildungen 4,5 * ----- | 1-4,6,7 | |

RECHERCHIERTE SACHGEBIETE (Int.Cl.7)

G01F

Der vorliegende Recherchenbericht wurde für alle Patentansprüche erstellt

| Recherchenort | Abschlußdatum der Recherche | Prüfer |
|---|---|---|
| Den Haag | 27. April 2004 | Heinsius, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
ÜBER DIE EUROPÄISCHE PATENTANMELDUNG NR.        EP 03 02 7195

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-04-2004

| Im Recherchenbericht angeführtes Patentdokument | | Datum der Veröffentlichung | Mitglied(er) der Patentfamilie | | Datum der Veröffentlichung |
|---|---|---|---|---|---|
| US 5866823 | A | 02-02-1999 | AU | 7383998 A | 08-12-1998 |
| | | | BR | 9815294 A | 04-12-2001 |
| | | | CN | 1264464 T | 23-08-2000 |
| | | | EP | 0990125 A1 | 05-04-2000 |
| | | | JP | 2001525069 T | 04-12-2001 |
| | | | WO | 9852001 A1 | 19-11-1998 |
| GB 2292613 | A | 28-02-1996 | KEINE | | |

Für nähere Einzelheiten zu diesem Anhang : siehe Amtsblatt des Europäischen Patentamts, Nr.12/82